# FASCICULE DE BREVET EUROPEEN

(11) **EP 1 219 842 B1**
(45) Date de publication et mention de la délivrance du brevet: **30.08.2006**
(21) Numéro de dépôt: 01420245.1
(22) Date de dépôt: 26.12.2001
(51) Int. Cl.: F16C 33/41, F16C 43/06

(54) **Cage de roulement, roulement à billes comportant une telle cage et procédé d'assemblage d'un tel roulement**
Wälzlagerkäfig, Wälzlager mit einem solchen Käfig und Verfahren zum Zusammenbau eines solchen Lagers
Rolling bearing cage, rolling bearing with such a cage and method of assembling such a bearing

(30) Priorité: 27.12.2000 FR 0017123
(43) Date de publication de la demande: 03.07.2002
(73) Titulaire: SKF Aerospace France, 26240 Saint Vallier (FR)
(72) Inventeur: Buard, Michel, 26240 Saint-Vallier (FR); Gabert, Norbert, 26240 Laveyron (FR)
(74) Mandataire: Myon, Gérard Jean-Pierre

(56) Documents cités:
- EP-A- 0 288 334
- GB-A- 227 974
- US-A- 5 015 105
- US-A- 5 082 375
- US-A- 5 491 893

## Description

L'invention a trait à une cage de roulement à billes, à un roulement à billes comprenant une telle cage et à un procédé d'assemblage d'un tel roulement.

Dans le domaine des roulements à billes, il est connu de réaliser des roulements dits "rigides" comprenant une unique rangée de billes disposées entre deux bagues, dites "interne" et "externe", et permettant un mouvement de rotation relatif de la bague interne par rapport à la bague externe sans basculement autour d'un axe perpendiculaire à l'axe central du roulement. US-A-5,015,105 décrit une cage en forme de bague utilisable avec de tels roulements

Il est, en outre, connu d'équiper un tel roulement d'une cage de séparation des billes, cette cage définissant des alvéoles dans lesquelles sont reçues les billes en étant séparées les unes des autres. Une telle cage est formée de deux éléments assemblés par agrafage, rivetage ou encliquetage et nécessitant des usinages de haute précision, afin de ne pas augmenter de façon trop sensible les frottements dans le roulement. La nécessité de la réalisation d'une telle cage en deux parties provient du fait que la cage doit être maintenue en place dans le volume interne du roulement défini entre les deux bagues. Faute de quoi, elle pourrait être chassée à l'extérieur de ce volume.

Les différents moyens d'assemblage connus des deux parties d'une cage induisent le plus souvent une augmentation des dimensions des zones de jonction entre ces deux parties. Par exemple, lorsque des rivets sont utilisés, une certaine quantité de matière doit être prévue autour de chaque rivet, afin de diminuer les risques de rupture de la cage. Ceci induit des intervalles de séparation relativement important entre deux billes adjacentes et le fait qu'un roulement équipé d'une telle cage ne peut généralement pas être soumis à une charge intense.

Afin de permettre une capacité de charge maximum d'un roulement, il est par ailleurs connu de fabriquer des roulements sans cage qui sont remplis de billes jointives. Cette solution induit à des frottements entre les billes, frottements qui peuvent générer une usure importante des billes, en particulier lorsqu'on utilise des billes en céramique. Cette solution induit également un risque que les billes puissent s'échapper du volume intérieur du roulement car elles ne sont pas maintenues en place. Comme il est nécessaire de prévoir une zone de mise en place des billes entre les bagues, les billes peuvent, en cours d'utilisation du roulement, être chassées vers l'extérieur à travers cette zone.

Il est connu de EP-A-0 288 334 de réaliser une cage de roulement à partir d'une bande flexible, cette cage étant pourvue d'une fente qui constitue une zone de faiblesse de la cage pouvant induire des déformations susceptibles de libérer les billes, notamment en cas de vibrations axiales du roulement. En outre, les logements de réception de billes débouchent d'un même côté de la bande, sauf ceux situés de part et d'autre de la fente, ce qui induit un déséquilibre de charge de la cage ainsi formée, préjudiciable au fonctionnement du roulement sous charge.

Enfin, il est connu de US-A-887,356 d'utiliser une bande en métal, en celluloïde ou en fibres pour définir par des ondulations plusieurs alvéoles régulièrement réparties de part et d'autre de cette bande. Les billes du roulement correspondant sont forcément disposées en alternance sur les deux côtés de la bande, ce qui impose de garnir le roulement avec la moitié des billes, alors que la bande est en place. Une telle opération est longue et fastidieuse et requiert une main d'oeuvre qualifiée.

C'est à ces inconvénients qu'entend plus particulièrement remédier l'invention en proposant une nouvelle cage de roulement qui évite les frottements entre les billes et assuré leur maintien dans le volume intérieur d'un roulement sans nécessiter d'assemblage complexe ou de haute précision.

Dans cet esprit, l'invention concerne une cage de roulement à billes en forme de bague obtenue par usinage ou moulage, définissant des alvéoles de réception de billes sur une unique rangée et destinée à être intercalée entre une bague interne et une bague externe d'un roulement, dans laquelle les alvéoles sont réparties en deux groupes, la ou les alvéoles du premier groupe ayant chacune une ouverture de mise en place d'une bille située sur un premier côté de la cage alors que la ou les alvéoles du second groupe ont chacune une ouverture de mise en place d'une bille située sur un second côté de la cage, opposée au premier côté, caractérisée en ce que le premier groupe d'alvéoles comprend toutes les alvéoles sauf deux, alors que le second groupe comprend deux alvéoles diamétralement opposées.

Grâce à l'invention, la cage remplit efficacement son rôle de séparation des billes et permet de les maintenir en position dans le volume intérieur du roulement car les billes introduites dans les alvéoles du second groupe sont, en quelque sorte, montées en opposition par rapport aux billes du premier groupe et font office d'organes de maintien de la cage dans le volume intérieur du roulement, sans nécessiter de moyens complexes de solidarisation de deux parties d'une cage. La cage de l'invention ne nécessite pas de réserver un volume important pour l'assemblage de deux parties, ce qui permet une implantation des billes avec une grande densité, le nombre de billes d'un roulement de diamètre donné pouvant être proche de celui d'un roulement sans cage, ce qui autorise l'utilisation d'un roulement équipé d'une cage conforme à l'invention sous une charge importante.

Selon des aspects avantageux de l'invention, la cage incorpore une ou plusieurs des caractéristiques suivantes :
- Chaque alvéole est définie entre deux bras et un fond, les bras s'étendant, en configuration montée de la cage dans un roulement, selon une direction globalement parallèle à un axe de rotation du roulement, alors que le fond est globalement perpendiculaire à cet axe. Certains des bras délimitent deux alvéoles adjacentes appartenant à un même groupe d'alvéoles, ces bras comprenant chacun une première extrémité adjacente aux fonds respectifs des alvéoles adjacentes et une seconde extrémité libre. Certains autres bras délimitent deux alvéoles adjacentes appartenant aux deux groupes d'alvéoles précités, ces bras comprenant une première extrémité adjacente au fond de l'une des deux alvéoles adjacentes et une seconde extrémité adjacente au fond de l'autre alvéole adjacente.
- Le fond des alvéoles d'un groupe d'alvéoles est percé d'un orifice de passage d'un organe d'extraction de billes en place dans ces alvéoles.
- Les bras de séparation des alvéoles forment chacun deux surfaces concaves orientées vers deux alvéoles adjacentes et aptes à coopérer avec la surface externe des billes.
- La cage est formée d'une pièce monobloc moulée ou usinée, en métal ou en matériau composite.

L'invention concerne également un roulement à billes comprenant une unique rangée de billes, disposées entre une bague interne et une bague externe, et une cage telle que précédemment décrite.

Un tel roulement est plus facile à assembler qu'un roulement à cage de l'état de la technique, alors que son prix de revient est inférieur et qu'il peut fonctionner sous une charge plus importante.

On peut en outre prévoir que l'une au moins des bagues est pourvue d'au moins une encoche d'introduction des billes dans un volume interne défini entre des pistes de roulement formées respectivement sur les bagues interne et externe.

L'invention concerne enfin un procédé d'assemblage d'un roulement à billes qui comprend une unique rangée de billes, disposées entre une bague interne et une bague externe, et une cage définissant des alvéoles de réception des billes, procédé dans lequel on introduit des billes dans un volume défini entre des pistes de roulement formées respectivement sur les bagues interne et externe. Ce procédé est caractérisé en ce qu'il comprend les étapes consistant à :
- introduire, dans le volume interne précité et par au moins une encoche ménagée sur un côté du roulement, un nombre de billes égal au nombre nominal de billes du roulement moins deux,
- mettre en place la cage en faisant pénétrer les billes, déjà en place dans le volume, dans des alvéoles de la cage ouverte sur un premier côté de la cage et
- introduire, par le ou les encoche(s) précitée(s), une bille dans chacune des deux alvéoles de la cage ouverte sur un second côté de la cage et diamétralement opposées.

L'introduction de la ou les billes dans la ou les alvéoles ouvertes sur le second côté de la cage et diamétralement opposées permet de maintenir la cage en position dans le volume intérieur du roulement sans nécessiter l'utilisation d'organes de blocage ou de pièces rapportées.

L'invention sera mieux comprise et d'autres avantages de celle-ci apparaîtront plus clairement à la lumière de la description qui va suivre d'un mode de réalisation d'une cage et d'un roulement conformes à son principe, donnée uniquement à titre d'exemple et faite en référence aux dessins annexés dans lesquels :
- la figure 1 est une vue en perspective d'une cage de roulement conforme à l'invention ;
- la figure 2 est une vue de face à plus petite échelle de la cage à la figure 1;
- la figure 3 est une coupe selon la ligne III-III à la figure 2 ;
- la figure 4 est une vue à plus grande échelle du détail IV à la figure 3 ;
- la figure 5 est une vue en perspective avec arrachement partiel d'un roulement à billes conforme à l'invention ;
- la figure 6 est une vue analogue à la figure 5, le roulement étant vu par le côté opposé et
- la figure 7 est une vue en perspective éclatée du roulement des figures 5 et 6, par le même côté que la figure 6.

La cage 1 conforme à l'invention est obtenue par usinage d'acier. La bague 1 pourrait également être moulée. Il s'agit d'une structure rigide qui permet de maintenir efficacement en position des billes, y compris en cas de vibrations du roulement dans lequel elle est montée.

La bague 1 est centrée autour d'un axe X₁-X'₁ et comprend deux arcs de ceintures 11 et 12 à partir desquels s'étendent des bras 13 globalement parallèles à l'axe X₁-X'₁. Des bras 14 s'étendent à partir des extrémités 11a, 11b, 12a et 12b des arcs 11 et 12. Les bras 14 sont reliés, à l'opposé des arcs 11 et 12, par des ponts 15 et 16. Les éléments 11, 12, 15 et 16 sont globalement perpendiculaires à l'axe X₁-X'₁.

On note respectivement 13a et 14a les extrémités des bras 13 et 14 reliées aux arcs 11 et 12. On note respectivement 13b et 14b les extrémités des bras 13 et 14 opposées aux extrémités 13a et 14a. Les extrémités 13b sont libres, c'est-à-dire ne sont pas rattachées à un arc, alors que les extrémités 14b des bras 14 sont rattachées aux ponts 15 et 16.

Les ponts 15 et 16 sont chacun percés d'un orifice 17, respectivement 18, dans leur partie centrale.

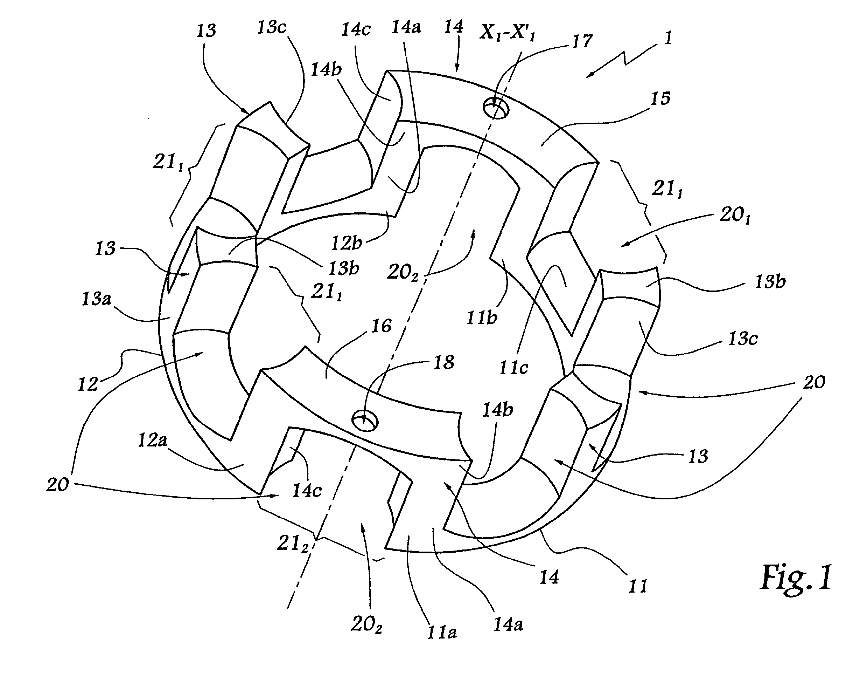

Des alvéoles 20 sont définies entre les bras 13 et 14. Plus spécifiquement, des alvéoles 20₁ appartenant à un premier groupe I d'alvéoles sont formées entre deux bras 13 adjacents ou entre un bras 13 et un bras 14 et ont leurs fonds respectifs constitués par l'une des ceintures 11 ou 12. L'ouverture 21₁ de chaque alvéole 20₁ de ce premier groupe est tournée vers le haut de la figure 1.

Dans l'exemple représenté, la cage 1 comprend deux séries de trois alvéoles 20₁ définies en regard des arcs 11 et 12.

Deux alvéoles 20₂, appartenant à un second groupe II d'alvéoles, sont définies entre deux bras 14 et ont leurs fonds respectifs constitués par les ponts 15 et 16. Les ouvertures 21₂ de ces alvéoles sont orientées vers le bas de la figure 1, c'est-à-dire à l'opposé des ouvertures 21₁ des alvéoles du premier groupe I.

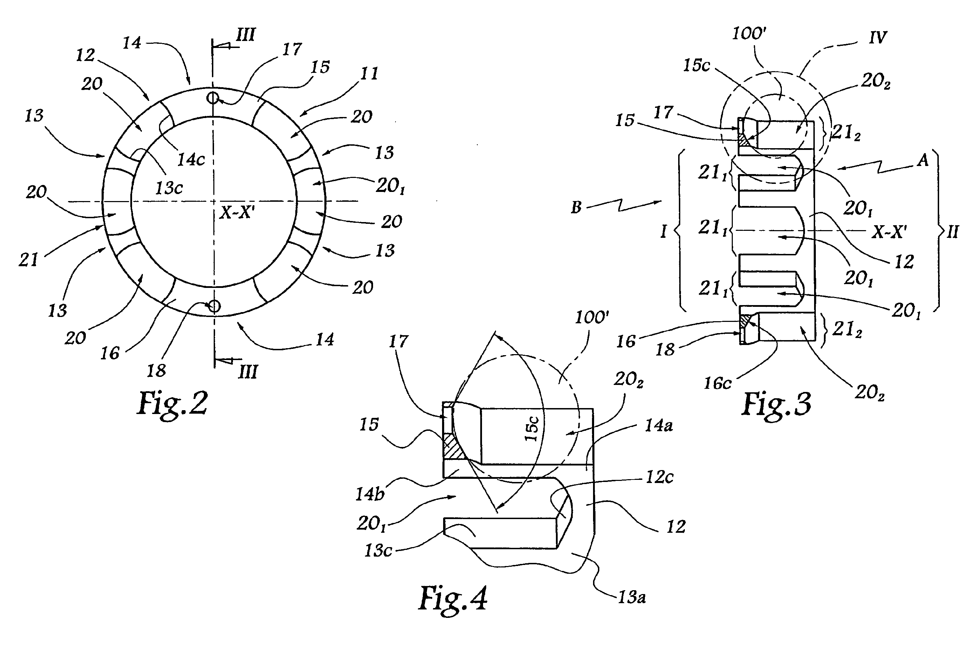

On note A le côté de la cage 1 visible par dessous à la figure 1 et sur la droite de la figure 3. Les alvéoles 20₂ ont leurs ouvertures respectives 21₂ débouchant sur le côté A de la cage 1.

On note B le côté de la cage 1 par lequel elle est vue à la figure 2 ; ce côté est opposé au côté A. Les alvéoles 20₁ ont leurs ouvertures respectives 21₁ débouchant sur ce côté B.

Les faces latérales 13c et 14c des bras 13 et 14 sont concaves, avec un rayon de courbure supérieur ou égal au rayon de billes 100 destinées à être introduites dans les alvéoles 20 à travers les ouvertures 21₁, 21₂.

Les fonds des alvéoles 20 ont également une forme concave, comme cela ressort de la figure 4. Du côté d'une alévole 20₂, le pont 15 présente une surface 15c. concave avec, en coupe transversale, une forme de V ouvert permettant un engagement partiel d'une bille.

La situation est analogue en ce qui concerne les arcs 11 et 12 et le pont 16 dont les surfaces 11c, 12c et 16c sont également concaves au niveau des fonds des alvéoles 20.

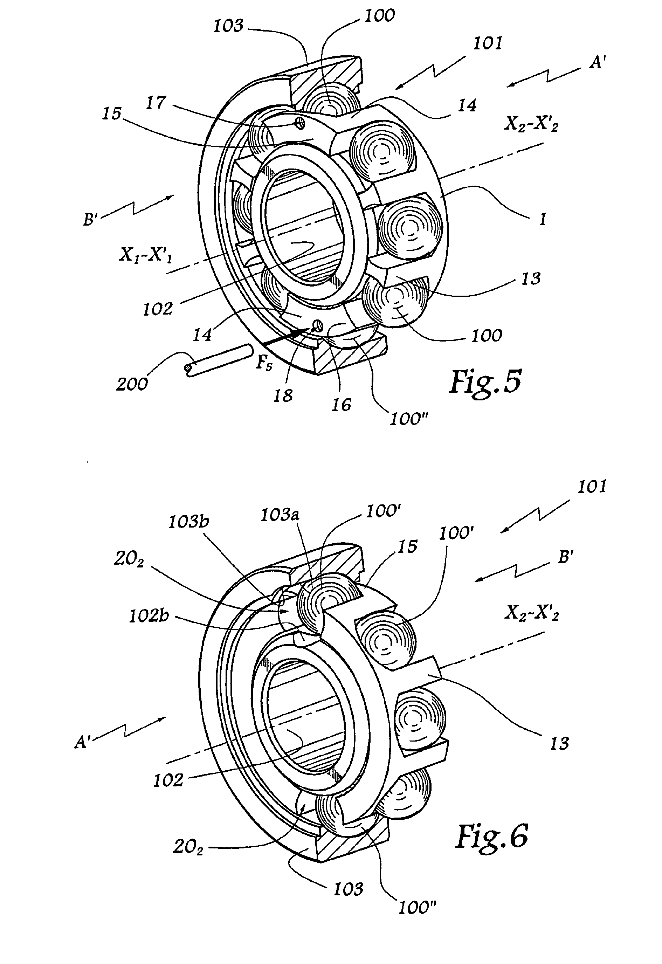

Comme il ressort plus particulièrement des figures 5 à 7, un roulement 101 conforme à l'invention comprend une bague interne 102 et une bague externe 103 centrées sur un axe X₂₋X'₂ qui est l'axe de rotation du roulement. En configuration montée du roulement représentée aux figures 5 et 6, les axes X₁-X'₁ et X₂-X'₂ sont confondus.

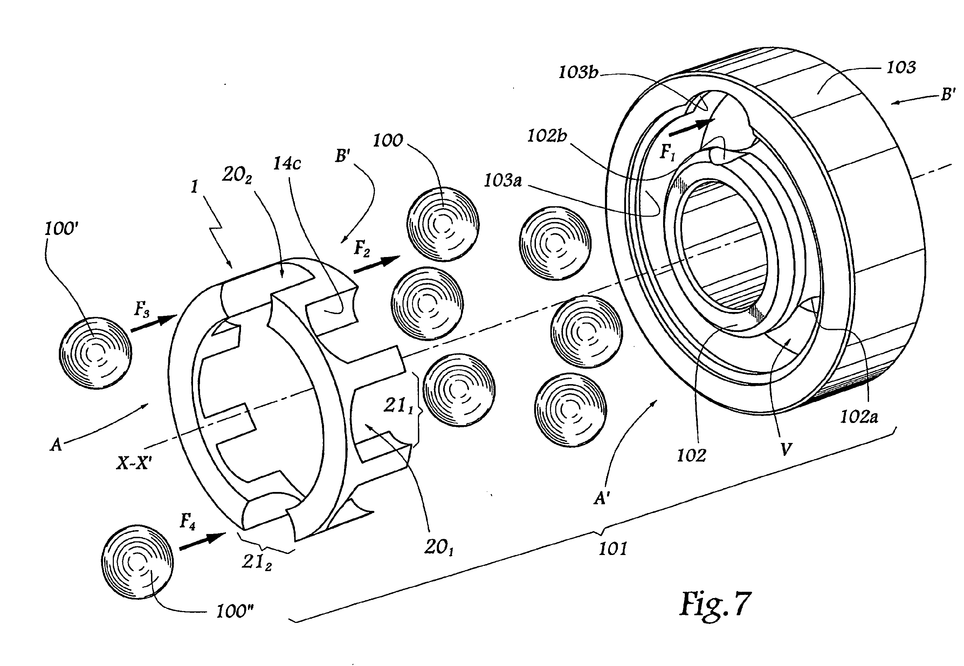

La bague interne 102 définit une piste 102a de roulement de billes 100, cette piste 102a étant formée par la surface radiale externe de la bague 102. La surface radiale interne de la bague 103 définit également une piste 103a de roulement des billes 100. On note V le volume intérieur du roulement 101 compris entre les pistes 102a et 103a. On note A' le côté du roulement 101 représenté sur la gauche des figures 6 et 7 et B' le côté de ce roulement représenté sur la gauche de la figure 5.

Sur le côté A' du roulement, les bagues 102 et 103 sont chacune pourvues d'une encoche 102b, 103b permettant l'introduction successive des billes 100 dans le volume V, comme représenté par la flèche F₁ à la figure 7.

Lorsqu'il convient d'assembler le roulement 101, on introduit six billes 100 dans le volume V en les faisant passer par l'ouverture ménagée au niveau des encoches 102b et 103b. On introduit alors la cage 1 dans le roulement 101, comme représenté par la flèche F₂ en répartissant les billes 100 dans les six alvéoles 20₁ du premier groupe I d'alvéoles 20.

On met ensuite en place, par la côté A' du roulement, une bille 100' dans l'alvéole 20₂ représentée en partie supérieure de la figure 7, ceci étant représenté par la flèche F₃. Ensuite, on fait tourner la cage 1 autour des axes X₁-X'₁ et X₂-X'₂. L'angle de rotation de la cage est d'environ 180°, ce qui permet d'amener la seconde alvéole 20₂ du second groupe II en regard des encoches 102b et 103b et d'introduire une seconde bille 100'' dans cette encoche comme représentée par la flèche F₄. Il est alors possible d'imprimer à la bague 1 un nouveau mouvement de rotation pour éloigner la bille 100'' des encoches 102b et 103b.

Du fait de la mise en place des billes 100' et 100'' la cage 1 est maintenue en position dans le volume V et remplit efficacement sa fonction d'écartement et de répartition des efforts entre les billes 100, 100' et 100'' sans qu'il soit nécessaire de rapporter une pièce de blocage sur cette cage.

Lorsqu'il convient de démonter le roulement 101, les billes 100' et 100'' sont chassées des alvéoles 20₂ en amenant ces alvéoles successivement en regard des encoches 102b et 103b et en exerçant une poussée sur les billes au moyen d'une tige 200 traversant un orifice 17 ou 18, comme représenté schématiquement par la flèche F₅ à la figure 5.

## Revendications

1. Cage de roulement à billes en forme de bague obtenue par usinage ou moulage, définissant des alvéoles de réception de billes sur une unique rangée et destinée à être intercalée entre une bague interne et une bague externe d'un roulement, lesdites alvéoles (20) étant réparties en deux groupes (I, II) , la ou les alvéoles (20₁) du premier groupe (I) ayant chacune une ouverture (21₁) de mise en place (F₂) d'une bille (100) située sur un premier côté (B) de ladite cage, alors que la ou les alvéoles (20₂) du second groupe (II) ont chacune une ouverture (21₂) de mise en place (F₃, F₄) d'une bille (100', 100'') située sur un second côté (A) de ladite cage, opposé au premier côté, **caractérisée en ce que** ledit premier groupe (I) d'alvéoles (20₁) comprend toutes les alvéoles sauf deux, alors que le second groupe (II) d'alvéoles comprend deux alvéoles (20₂) diamétralement opposées.

2. Cage selon la revendication 1, **caractérisée en ce que** chaque alvéole (20₁, 20₂) est définie entre deux bras (13, 14) et un fond (11, 12, 15, 16), lesdits bras s'étendant, en configuration montée de ladite cage (1) dans un roulement (101), selon une direction globalement parallèle à un axe de rotation (X₂-X'₂) du roulement, alors que ledit fond est globalement perpendiculaire audit axe.

3. Cage selon la revendication 2, **caractérisée en ce que** certains (13) desdits bras délimitent deux alvéoles adjacentes (20₁) appartenant à un même groupe (I) d'alvéoles (20), lesdits bras comprenant chacun une première extrémité (13a) adjacente aux fonds respectifs (11, 12) desdites alvéoles adjacentes et une seconde extrémité (13b) libre.

4. Cage selon la revendication 2, **caractérisée en ce que** certains (14) desdits bras délimitent deux alvéoles adjacentes (20₁, 20₂) appartenant aux deux groupes (I, II) d'alvéoles, lesdits bras comprenant une première extrémité (14a) adjacente au fond (11, 12) de l'une (20₁) desdites deux alvéoles adjacentes et une seconde extrémité (14b) adjacente au fond (15, 16) de l'autre alvéole adjacente (20₂).

5. Cage selon l'une des revendications 2 à 4, **caractérisée en ce que** le fond (15, 16) des alvéoles (20₂) d'un groupe (II) d'alvéoles est percé d'un orifice (17, 18) de passage d'un organe (200) d'extraction de billes (100', 100'') en place dans lesdites alvéoles.

6. Cage selon l'une des revendications 2 à 5, **caractérisée en ce que** lesdits bras (13, 14) forment chacun deux surfaces concaves (13c, 14c) orientées vers deux alvéoles adjacentes (20₁, 20₂) et aptes à coopérer avec la surface externe desdites billes (100, 100', 100'').

7. Cage selon l'une des revendications précédentes, **caractérisée en ce qu'**elle est formée d'une pièce monobloc (1) moulée ou usinée, en métal ou en matériau composite.

8. Roulement à billes (101) comprenant une unique rangée de billes (100, 100', 100''), disposées entre une bague interne (102) et une bague externe (103), et une cage (1) selon l'une des revendications précédentes.

9. Roulement à billes selon la revendication 8, **caractérisé en ce que** l'une au moins desdites bagues (102, 103) est pourvues d'au moins une encoche (102b, 103b) d'introduction (F₁, F₃, F₄) desdites billes (100, 100', 100'') dans un volume interne (V) défini entre des pistes de roulement (102a, 103a) formées respectivement sur lesdites bagues interne et externe.

10. Procédé d'assemblage d'un roulement à billes comprenant une unique rangée de billes, disposées entre une bague interne et une bague externe, et une cage définissant des alvéoles de réception desdites billes, procédé dans lequel on introduit des billes dans un volume défini entre des pistes de roulement formées respectivement sur lesdites bagues interne et externe, **caractérisé en ce qu'**il comprend des étapes consistant à :
- introduire (F₁), dans ledit volume (V) et par au moins une encoche (102b, 103b) ménagée sur un côté (A') dudit roulement (101), un nombre de billes (100) égal au nombre nominal de billes dudit roulement moins deux ;
- mettre en place (F₂) ladite cage (1) en faisant pénétrer lesdites billes, déjà en place dans ledit volume, dans des alvéoles (20₁) de ladite cage ouvertes sur un premier côté (B) de ladite cage et
- introduire (F₃, F₄), par ladite ou lesdites encoche(s) (102b, 103b), une bille (100', 100'') dans chacune de deux alvéoles (20₂) de ladite cage ouverte sur un second côté (A) de ladite cage et diamétralement opposées.

## Claims

1. A ball-bearing cage in the form of a machined, cast or moulded ring defining cells adapted to receive a single row of balls and designed to be interleaved between an internal ring and an external ring of a bearing, said cells (20) being divided into two groups (I, II), the cell(s) (20₁) of the first group (I) each having an opening (21₁) for placement (F₂) of a ball (100) situated on a first side (B) of said cage and the cell(s) (20₂) of the second group (II) each having an opening (21₂) for placement (F₃, F₄) of a ball (100', 100") situated on a second side (A) of said cage opposite said first side, **characterised in that** said first group (I) of cells (20₁) comprises all of the cells except two and the second group (II) of cells comprises two diametrally opposite cells (20₂).

2. A cage according to claim 1, **characterised in that** each cell (20₁, 20₂) is defined between a bottom (11, 12, 15, 16) and two arms (13, 14) extending, when said cage (1) is mounted in a bearing (101), in a direction globally parallel to a rotation axis (X₂-X'₂) of the bearing and said bottom is globally perpendicular to said axis.

3. A cage according to claim 2, **characterised in that** some (13) of said arms delimit two adjacent cells (20₁) belonging to the same group (I) of cells (20) and said arms each have a first end (13a) adjacent the respective bottoms (11, 12) of said adjacent cells and a free second end (13b).

4. A cage according to claim 2, **characterised in that** some (14) of said arms delimit two adjacent cells (20₁, 20₂) belonging to two groups (I, II) of cells and said arms have a first end (14a) adjacent the bottom (11, 12) of one (20₁) of said two adjacent cells and a second end (14b) adjacent the bottom (15, 16) of the other adjacent cell (20₂).

5. A cage according to any one of claims 2 to 4, **characterised in that** the bottom (15, 16) of the cells (20₂) of a group (II) of cells is pierced by an orifice (17, 18) for a member (200) for extracting balls (100', 100") in place in said cells.

6. A cage according to any one of claims 2 to 5, **characterised in that** said arms (13, 14) each form two concave surfaces (13c, 14c) oriented towards two adjacent cells (20₁, 20₂) and adapted to cooperate with the external surface of said balls (100, 100', 100").

7. A cage according to any one of the preceding claims, **characterised in that** it is formed as a one piece component (1) machined, moulded or cast from a metal or a composite material.

8. A ball-bearing (101) comprising a single row of balls (100, 100', 100"), disposed between an internal ring (102) and an external ring (103), and a cage (1) according to any one of the preceding claims.

9. A ball-bearing according to claim 8, **characterised in that** at least one of said rings (102, 103) includes at least one notch (102b, 103b) for introducing (F₁, F₃, F₄) said balls (100, 100', 100") into an internal volume (V) defined between races (102a, 103a) formed on said internal and external rings, respectively.

10. A method of assembling a ball-bearing including a single row of balls, disposed between an internal ring and an external ring, and a cage defining cells for receiving said balls, in which method balls are introduced into a volume defined between races formed on said internal and external rings, respectively, which method is **characterised in that** it comprises the steps of:
- introducing (F₁) into said volume (V) via at least one notch (102b, 103b) formed on one side (A') of said bearing (101) a number of balls (100) equal to the nominal number of balls of said bearing less two;
- placing (F₂) said cage (1) so that said balls, already in place in said volume, enter cells (20₁) of said cage open on a first side (B) of said cage, and
- introducing (F₃, F₄) a ball (100', 100") via said notch (es) (102b, 103b) into each of two diametrally opposite cells (20₂) of said cage open on a second side (A) of said cage.

## Patentansprüche

1. Kugellagerkäfig in Form eines Ringes, der durch maschinelle Bearbeitung oder Formgießen erhalten wird und der Zellen zur Aufnahme von Kugeln auf einer einzigen Reihe begrenzt und dazu vorgesehen ist, zwischen einem Innenring und einem Außenring eines Lagers angeordnet zu werden, wobei die Zellen (20) in zwei Gruppen (I, II) aufgeteilt sind und die Zelle(n) (20₁) der ersten Gruppe (I) jeweils eine Öffnung (21₁) zum Einsetzen (F₂) einer Kugel (100) aufweist, die auf der einen Seite (B) des Käfigs liegt, während die Zelle(n) (20₂) der zweiten Gruppe (II) jeweils eine Öffnung (21₂) zum Einsetzen (F₃, F₄) einer Kugel (100', 100") aufweist (aufweisen), die auf einer zweiten Seite (A) des Käfigs, entgegengesetzt zur ersten liegt, **dadurch gekennzeichnet, dass** die erste Gruppe (I) von Zellen (20₁) alle Zellen außer zwei umfasst, während die zweite Gruppe (II) von Zellen zwei einander diametral gegenüberliegende Zellen (20₂) umfasst.

2. Käfig nach Anspruch 1, **dadurch gekennzeichnet, dass** jede Zelle (20₁, 20₂) zwischen zwei Armen (13, 14) und einem Boden (11, 12, 15, 16) begrenzt ist, wobei die Arme sich im eingebauten Zustand des Käfigs (1) in einem Lager (101) in eine Richtung erstrecken, die im Wesentlichen parallel zur Rotationsachse (X₂-X₂') des Lagers ist, während der Boden im Wesentlichen senkrecht zur Achse ist.

3. Käfig nach Anspruch 2, **dadurch gekennzeichnet, dass** einige (13) der Arme zwei benachbarte Zellen (20₁) begrenzen, die einer gleichen Gruppe (I) von Zellen (20) angehören, wobei die Arme jeweils ein erstes Ende (13a) benachbart zu den jeweiligen Böden (11, 12) der benachbarten Zellen und ein zweites freies Ende (13b) umfassen.

4. Käfig nach Anspruch 2, **dadurch gekennzeichnet, dass** bestimmte (14) der Arme zwei benachbarte Zellen (20₁, 20₂) begrenzen, die zu den zwei Gruppen (I, II) von Zellen angehören, wobei die Arme ein erstes Ende (14a) benachbart zum Boden (11, 12) von einer (20₁) der zwei benachbarten Zellen und ein zweites Ende (14) benachbart zum Boden (15, 16) der anderen benachbarten Zelle (20₂) umfassen.

5. Käfig nach einem der Ansprüche 2 bis 4, **dadurch gekennzeichnet, dass** der Boden (15, 16) der Zellen (20₂) einer Gruppe (II) von Zellen von einer Öffnung (17, 18) für den Durchgang eines Organs (200) zum Heranziehen von sich in Stellung in den Zellen befindenden Kugeln (100', 100") durchbohrt ist.

6. Käfig nach einem der Ansprüche 2 bis 5, **dadurch gekennzeichnet, dass** die Arme (13, 14) jeweils zwei konkave Flächen (13c, 14c) bilden, die zu zwei benachbarten Zellen (20₁, 20₂) gerichtet sind und in der Lage sind, mit der Außenfläche der Kugeln (100, 100', 100") zusaznmenzuarbeiten.

7. Käfig nach einem der vorhergehenden Ansprüche, **dadurch gekennzeichnet, dass** er aus einem einstückigen, geformten oder bearbeiteten Teil (1) aus Metall oder einem Verbundmaterial gebildet ist.

8. Kugellager (101), eine einzige Reihe von Kugeln (100, 100', 100"), die zwischen einem Innenring (102) und einem Außenring (103) angeordnet sind, und einen Käfig (1) nach einem der vorhergehenden Ansprüche umfassend.

9. Kugellager nach Anspruch 8, **dadurch gekennzeichnet, dass** mindestens einer der Ringe (102, 103) mit mindestens einer Vertiefung (102b, 103b) für die Einsetzung (F₁, F₃, F₄) der Kugeln (100, 100', 100") in ein Innenvolumen (V) versehen ist, das zwischen den Rollbahnen (102a, 103a) definiert ist, die jeweils auf dem Innen- und Außenring gebildet sind.

10. Verfahren zum Zusammensetzen eines Kugellagers, eine einzige Reihe von Kugeln, die zwischen einem Innen- und einem Außenring angeordnet sind, und einen Käfig umfassend, der Zellen zur Aufnahme der Kugeln begrenzt, wobei man bei dem Verfahren Kugeln in ein Volumen einsetzt, das zwischen Rollbahnen definiert ist, die jeweils auf dem Innen- und Außenring gebildet sind, **dadurch gekennzeichnet, dass** es Schritte umfasst, die darin bestehen:
- in das Volumen (V) und durch mindestens eine Vertiefung (102b, 103b), die auf einer Seite (A') des Lagers (101) eingearbeitet ist, eine Anzahl von Kugeln (100) einzusetzen (F₁), die gleich der Nominalanzahl der Kugeln des Lagers minus zwei ist;
- den Käfig (1) in Stellung zu bringen (F₂), indem die Kugeln, die sich schon im Volumen befinden, in die auf einer ersten Seite (B) des Käfigs offenen Zellen (20₁) des Käfigs eingeführt werden und
- über die eine oder mehreren Vertiefungen (102b, 103b) eine Kugel (100', 100") in jede der zwei zu einer zweiten Seite (A) des Käfigs offenen und sich diametral gegenüberliegenden Zellen (20₂) des Käfigs einzusetzen (F₃, F₄).
